# EUROPEAN PATENT APPLICATION

(11) **EP 2 374 934 A2**
(43) Date of publication of application: **12.10.2011**
(21) Application number: 11159314.1
(22) Date of filing: 23.03.2011
(51) Int. Cl.: E01C 19/10, C08L 95/00

(54) **Processing asphalt material**

(30) Priority: 06.04.2010 FI 20105349
(71) Applicant: Kalottikone Oy, 96300 Rovaniemi (FI)
(72) Inventor: Oinas, Jorma, 95300, Tervola (FI); Torvinen, Pauli, 96910, Rovaniemi (FI)
(74) Representative: Pykälä, Timo Tapani

(57) **Abstract**

There is provided a solution for generating a heated gas mixture (114) for heating and drying asphalt material (100) comprising mineral aggregate and/or recycled crushed asphalt. The solution comprises generating heated gas (104), providing water vapor or water (108) to the heated gas (104), providing air (112) to the heated gas (104) so as to control the moisture content of a heated gas mixture (114), wherein the heated gas mixture comprises the heated gas (104), the water vapor and the air (112), and leading the heated gas mixture (114) to a container (118) containing the asphalt material (100) so that the asphalt material (100) is dried and heated by the heated gas mixture (114).

## Description

### Field

The invention relates generally to generating a heated gas mixture for processing asphalt materials. Furthermore, the invention relates to heating and drying the asphalt materials.

### Background

The asphalt material as a term relates to a material that is used in making of asphalt. The asphalt, on the other hand, denotes a mixture of the asphalt material and binding material. The asphalt material may be comprised of mineral aggregate and recycled crushed asphalt, or either one of the above alone. The material needs to be heated so that the binding material, such as bitumen or polymers, can be added to the material in an efficient way in order to create asphalt.

It is conventional in the processing of an asphalt material that the starting material is heated directly by flame of a burner. Further, it is known from document US 5 277 710 to heat the mineral aggregate or a mixture of the mineral aggregate and the crushed asphalt or the crushed asphalt as such by leading heated gas to the hopper containing the material. The heated gas comprises gas and water vapor.

However, there are problems related to the current methods for heating the asphalt material. The problems may be related to insufficiency of the obtained temperature for the asphalt material, unnecessary moisture created for the asphalt material, poisonous gas being emitted to the atmosphere, etc. Thus, it is important to provide an improved solution for processing the masses.

### Brief description of the invention

Embodiments of the invention seek to improve the processing of asphalt materials comprising mineral aggregate and/or recycled crushed asphalt.

According to an aspect of the invention, there is provided a method as specified in claim 1.

According to an aspect of the invention, there is provided an apparatus as specified in claim 7.

According to an aspect of the invention, there is provided a use of a heated gas mixture as specified in claim 14.

### List of drawings

In the following, the invention will be described in greater detail with reference to the embodiments and the accompanying drawings, in which
Figure 1 presents an asphalt material processing apparatus for generating a heated gas mixture according to an embodiment;
Figure 2 shows a method for drying and heating asphalt material by the heated gas mixture according to an embodiment.

### Description of embodiments

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

The asphalt which is seen on paved ground is typically generated by adding bitumen as the binding material to a starting asphalt material. The starting asphalt material may be mineral aggregate alone, recycled crushed asphalt (recycling crush) alone or a mixture of the two. In the two latter options, there may already be enough bitumen among the crushed asphalt in which case no bitumen needs to be added anymore. However, in order to use the asphalt in the ground and also to facilitate the addition of bitumen to the asphalt material, the starting material needs to be heated. It is conventional in the processing of an asphalt material that the starting material is heated directly by a flame of a burner. Thereby the flame comes into contact with the mineral aggregate and/or the crushed asphalt, whereby, on one hand, dust is emitted from the mineral aggregate and, on the other hand, noxious gases are emitted from the crushed asphalt, particularly from the bitumen therein. Thus, the use of the direct flame is not desirable although it is used commonly because it provides high temperatures. In those cases expensive filters and dust recovery systems may be applied in separating the dust and the noxious gases so that they are not emitted to the surrounding air.

The asphalt is generally divided into two main groups according to the temperature of the asphalt material after heating. The threshold for division is 100° in celsius. The asphalts that are constructed of an asphalt material being over 100° after heating are called hot asphalts, whereas the asphalts that are constructed of asphalt material being below 100° after heating are called cold asphalts. The hot asphalts are typically made with the direct flame in order to guarantee temperatures hot enough. On the contrary, the method disclosed in US 5 277 710 where the water vapor and the heated gas is led to the asphalt starting material provides temperatures of approximately 80°. This is a limiting factor as the method disclosed in US 5 277 710 may be used for the manufacture of the cold asphalts only. Moreover, because the temperature is below 100°, the moisture content of the heated asphalt material may be considerable and may cause problems in the adherence between the added or the existing bitumen and the asphalt material. Therefore, the use of a dried asphalt starting material, such as the mineral aggregate alone, the recycled crushed asphalt (recycling crush) alone or the mixture of the two, enables obtaining the optimum result when adding binding material.

The cold asphalts are generally used for streets which are not under heavy and dense traffic, such as walking streets. On the contrary, the hot asphalts may be used for highways, etc., which are under heavy and dense traffic. The hot asphalts also enable the utilization of a large variety of bitumen whereas the cold asphalts are limited in terms of the available bitumen.

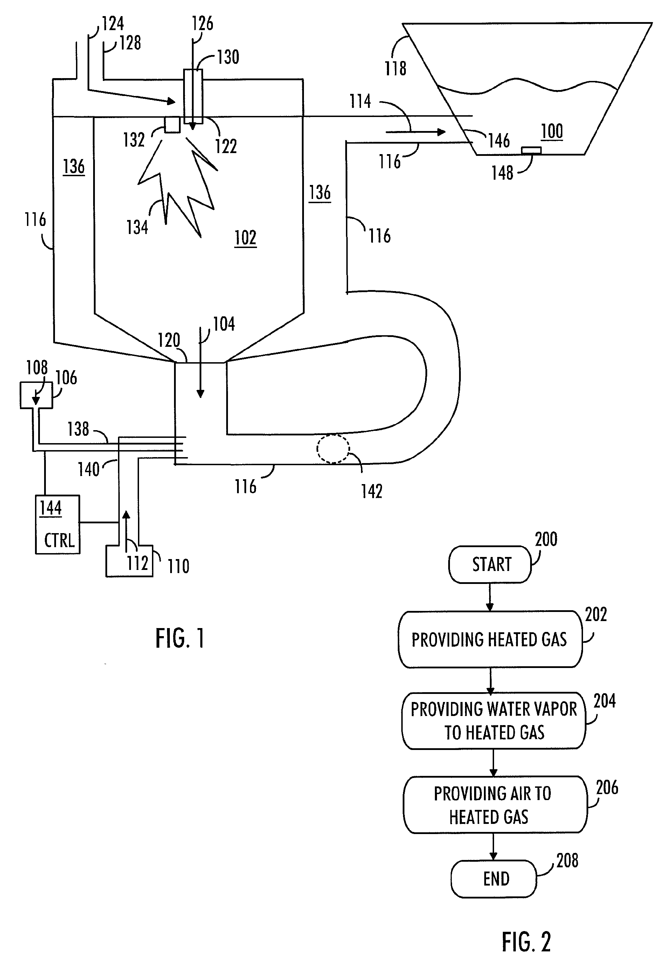

Figure 1 shows a cross sectional view of an asphalt material processing apparatus for generating a heated gas mixture for heating and drying asphalt material 100, wherein the asphalt material comprises mineral aggregate and/or recycled crushed asphalt. The apparatus may comprise a gas supply 102 for providing heated gas 104. The apparatus may further comprise a water supply 106 configured to provide water 108 or water vapor to the heated gas 104. Further, the apparatus may comprise an air supply 110 configured to provide air 112 to the heated gas 104 so as to control the moisture content of a heated gas mixture 114, wherein the heated gas mixture 114 comprises the heated gas 104, the water vapor and the air 112. The apparatus may further comprise at least one transport channel 116 configured to transport the heated gas mixture 114 to a container 118 containing the asphalt material 100 so that the asphalt material 100 is dried and heated by the heated gas mixture 114.

Let us discuss these elements in more detail. The gas supply 102 is in an embodiment a gas storage unit, wherein the gas exiting the unit is heated so as to obtain the heated gas. The gas may have been stored in the unit beforehand. In this embodiment, the gas supply 102 may provide the gas by allowing the stored gas to exit the gas supply 102 from an output 120.

According to another embodiment, as shown in Figure 1, the gas supply 102 is a combustion chamber comprising an input 122 for receiving air 124 and fuel 126 to the combustion chamber so that combustion gas of the fuel 126 serves as the provided heated gas 104. There may be an air intake 128 and a fuel intake 130, operated by valves, spray nozzles, etc, although not shown in the Figure. The fuel 126 may be gasoline, light oil, thin oil, ethanol, bio-based fuels, etc. In general the fuel may be any fuel that may be ignited so that combustion gases are generated. The air 124 acts as an oxidizer. Other oxidizers besides the air may be used, including nitrous oxide, etc. As the air-fuel mixture enters the combustion chamber via the input 122, it is ignited by a spark 132, for example. As a result the fuel-air mixture burns 134 into the combustion gases of the fuel 126. The hot combustion gases may be used as the heated gas 104 that is taken out of the combustion chamber 102 via the output 120. The gas 104 may autonomously exit the combustion chamber due to the increasing volume of the combustion gases in the chamber that pushes part of the combustion gases to exit the chamber through the output 120. Thus, in this embodiment, the heated gas 104 is the combustion gas of fuel.

By properly proportioning the fuel and the air entering the combustion chamber 102, optimal combustion conditions are created in the combustion chamber. This enables at least nearly complete combustion with low emission of noxious gases.

In an embodiment, the gas supply 102 is surrounded by a tank 136 that also act as part of the at least one transport channel 116 for leading the heated gas mixture 114 to the container 118. The tank 136 is advantageous because the outer surface of the tank 136 is not as hot as the surface of the gas supply 102, especially when the gas supply 102 is the combustion chamber. This avoids persons from burning their hands, for example. In addition, it is advantageous for the tank 136 to be part of the at least one transport channel 116 so that the generated heated gas mixture 116 is guided to be in contact with an outer surface of the gas supply 102 before entering the container 118. The hot surface of the gas supply 102 aids in maintaining the temperature of the heated gas mixture 114 high or increases the temperature of the heated gas mixture 114.

As the heated gas 104 exits the gas supply 102, water vapor is provided to the heated gas 104. The provided water vapor gets mixed with the heated gas 104. The water vapor is vaporized water. It can be provided to the heated gas 104 by adding water 108 to the heated gas 104 by means of pumps or compressors, for example, so that the water 108 vaporizes due to the heat of the gas 104. For this reason there may be a water supply 106 and transport means 138 comprised in the apparatus. Alternatively, one can provide the water vapor directly to the heated gas 104 by generating the water vapor outside the apparatus and simply guiding the water vapor to the heated gas 104 via the transport means 138. It is important for the heating of the asphalt material 100 that the heated gas mixture 114 contains a quantity of water vapor functioning as a heating medium. The vapor may be, but not necessarily, superheated water vapor. That is, the temperature of the vapor is higher than the boiling point temperature corresponding to the pressure. By adding water vapor to the heated gas 104, the heat content of the gas 104 is increased and, additionally, the gas 104 obtains a property that inhibits formation of dust when affecting the asphalt material 100. However, the vapor causes the heated gas mixture 114 to be somewhat wet which causes the drying of the asphalt material 100 to be difficult, when only the water vapor and the heated gas 104 are present.

For this reason, the apparatus further provides air 112 to the heated gas 104. The provided air 112 gets mixed with the heated gas 104. The air 112 may be provided from an air supply 110 via transport means 140. The air 112 may be provided to the transport channel 116 via the transport means 140 by using compressors or pumps, although not shown in Figure 1. The air 112 is advantageous because the use of the air 112 enables controlling the temperature and the moisture content of the heated gas mixture 104, wherein the heated gas mixture 104 after addition of the air 112 and the water vapor comprises the heated gas 104, the water vapor and the air 112. The air 112 may be called cooling air because the air 112 can be used in controlling the temperature of the heated gas mixture 114. In an embodiment, the air 112 will cool the heated gas 104 exiting the gas supply 102.

By providing the air 112 among the heated gas mixture 114, drying of the asphalt material 100 in the container 118 may be obtained in addition to heating. The drying is due to the fact that the temperature of the asphalt material after heating may be obtained to be at least 100 degrees celsius. The air 112 is used to control the moisture content (or the relative humidity) of the heated gas mixture 114. In an embodiment, the dew point of the gas mixture 114 is decreased by adding the air 112 to the gas 104 in order to improve the functionality of the gas mixture 114 as a drying element. Therefore it can be controlled that the humidity of the heated gas mixture 114 is nowhere near the dew point of the heated gas mixture 114, and by adding the air 112 to the system, the dew point temperature goes even further away from the temperature of the gas mixture 114. The dew point is the point of temperature when the gas mixture 114 condenses into water. The hot and dry gas mixture 114 reduces the humidity of the asphalt material 100 being heated when the gas mixture 114 affects the material 100. This is a surprising effect in the field of asphalt manufacture and allows the manufacture of hot asphalts without the need of expensive apparatuses that are used in the conventional solutions. Therefore, in an embodiment, the asphalt material processing apparatus of Figure 1 is used in manufacturing hot asphalt, wherein the asphalt material 100 being heated and dried comprises the mineral aggregate and/or the recycled crushed asphalt.

According to an embodiment, the generated heated gas mixture 114 comprising the air 112 is guided to be in contact with an outer surface of a gas supply 102 (combustion chamber) before leaving the apparatus. This may be accomplished by having the transport channel 116 surround the gas supply 102 as shown in Figure 1, where the tank 136 is part of the transport channel 116. This is advantageous so that the heated gas mixture 114 maintains the high temperature. Alternatively, as the heated gas mixture 114 circulates on the outer surface of the gas supply 102, the temperature of the heated gas mixture 114 may increase.

As mentioned earlier, the apparatus may further comprise the at least one transport channel 116 for leading the heated gas mixture 114 to the container 118 so that the asphalt material 100 in the container 118 is dried and heated by the heated gas mixture 114. Accordingly, the asphalt material 100 is successfully heated to a temperature that is sufficiently high for a successful addition of binding material and, on the other hand, avoiding the dusting of the asphalt material 100. In an embodiment, the sufficiently high temperature is at least 100 degrees celsius so that hot asphalt is obtained. Thus, the temperature of the asphalt material 100 is at least 100 degrees celsius after the heated gas mixture 114 has affected the asphalt material 100. This may be accomplished by providing the air 112 to the system, so that the heated gas mixture 114 used as an actuator of the heating and drying process comprises the provided air 112. The additional air dries the heated gas mixture 114 and the asphalt material 100.

The air 112 and the water 108 may be added in a plurality of locations along the transport channel 116. The air 112 can be added first and the water 108 second, or vice versa, or they can be added substantially at the same time. The locations for providing the air 112 and the water vapor (or the water instead of the water vapor) may be selected arbitrarily. They can be provided substantially from the same location, or the location for providing the water or the water vapor may be different than the place for providing the air 112.

The apparatus may further comprise a mixer 142 that mixes the heated gas 104, the water vapor and the air 112 together. The mixer 142 may comprise rotating wings, for example. In an embodiment, the water supply 106 and the air supply 110 are connected to the transport channel 116. The mixer 142 may be located after the air 112 and the water 108 (or the water vapor) have been injected to be in contact with the heated gas 104.

According to an embodiment, the apparatus may further comprise a controller 144 that may be used in controlling the amount of the provided air 112 and the amount of provided water 108 (or the amount of the provided water vapor) so as to control the temperature and the moisture content of the heated gas mixture 114. It is beneficial to be able to control the saturation of the water vapor and air 112 so as to obtain the most suitable moisture content of the heated gas mixture 114. That enables the asphalt material 100 to be heated in the desired temperature, for example, at least to 100 degrees celsius. According to an embodiment, the most suitable moisture content of the heated gas mixture 114 is obtained when the ratio between the mass of the provided air 112 and the mass of the provided water 108 (or the provided water vapor instead of the water 108) is between 2 and 9. This means that the mass of the air 112 provided is 2 to 9 times the amount of water provided. The ratio is extremely important for providing suitable conditions for the heating and the drying. According to various different embodiments, the ratio is 2, 3, 4, 5, 6, 7, 8, 9, or between any two values of the above mentioned eight values.

Moreover, the controller 144 may control the temperature of the provided air 112 so as to affect the temperature of the heated gas mixture 114. According to an embodiment, the temperature of the generated heated gas mixture 114 obtained may be between 250 and 350 degrees celsius. The temperature is preferably the same when the gas mixture 114 enters the container 118. The air 112 having a high temperature will increase the temperature of the heated gas mixture 114 whereas the air 112 having a low temperature will decrease the temperature of the heated gas mixture 114.

The air 124 and 112, the fuel 126 and the water 108 or the water vapor may be forced to the apparatus by using valves, pumps, compressors, or a like, although not shown in Figure 1.

According to an embodiment, the apparatus may further comprise the container 118. The container may receive the asphalt material 100 to be dried and heated. The material 100 may be poured to the container 118 from above. The container 118 may thus be open from the top. However, it may be closed and opened when material 100 is being poured. The container 118 may further comprise an input 146 configured to receive the heated gas mixture 114 via the at least transport channel 116, wherein the input 146 is located at the lower half of the container 118 so that the heated gas mixture 114 dries and heats the asphalt material 100 from below upwards as the heated gas mixture 114 rises upwards. Moreover, by leading the heated gas from below to the asphalt material 100 disposed in the container 118, the material 100 at the bottom of the container 118 may be very efficiently heated to a temperature desired, whereby the material 100 in the container 118 functions as a heat insulator with respect to the surroundings. The heat in the gas mixture 114 is effectively transferred to the material 100 without emitting dust or, when the crushed asphalt is heated, noxious gases. The most essential reason for this is that the crushed asphalt is not heated by a flame and very high temperatures that lead to gassing do thus not occur.

The gases leaving the container 118 are moist, i.e., the relative humidity of he gases may be 100 percent. The temperature of the gases leaving the material 100 to be heated is only about 20° to 60° C, for example between 20° to 30°. The temperature depends on the humidity and the starting temperature of the material 100 to be heated. In any case, the temperature may be equal to or below the dew point. Since the gases are forced to move through the entire container 118 before they are released to the surroundings and they thus have time to emit their entire heat content to the mixture.

In an embodiment, the heated gas mixture 114 enters the container 118 at the lower portion of the container 118 and the heated gas is evenly distributed to the interior of the container 118, whereby the gas evenly heats the material 100 supplied to the container 118. The even heating is obtained, for example, by having the transport channel 116 penetrating into the material 100. In case the transport channel 116 is a pipe or alike, the transport channel 116 may comprise apertures along the part of the transport channel 116 that is inside the container 118 and surrounded by the asphalt material 100. Then the gas mixture 114 is evenly distributed all over the asphalt material 100 along the pipe and even heating and even drying is obtained. In an embodiment, the material 100 is mixed in the container 118 by a screw, for example, to further improve the even heating and drying.

The container 118 may further comprise an output 148 for allowing the heated and dried asphalt material 100 to exit the container 118, wherein the output 148 is located substantially at the bottom portion of the container 118. The material 100 may be allowed to exit as the material 100 at the bottom of the container 118 reaches the desired temperature, such as above 100°, and/or the desired level of moisture (humidity). Therefore, in addition to the temperature of the material 100, the moisture content of the material 100 may be measured as well by known means.

Instead of using the container 118, the material 100 may be located in a drum, in a silo or in a screw. The heated gas mixture 114 may be led via the transport channel 116 to any place where the material 100 to be heated and dried is located. Afterwards, the binding material, such as bitumen-based binding material, may be added to the heated and dried asphalt material 100, if needed.

According to an embodiment, the heated gas mixture 114 comprising the heated gas 104, the water vapor and the added air 112 may be used for heating and drying asphalt material 100 comprising the mineral aggregate and/or the recycled crushed asphalt to temperatures of at least one hundred degrees celsius. Therefore, hot asphalts may be obtained.

The embodiments of the invention offer many advantages. These relate to the dustlessness of the process and the lack of noxious gases (blue gases) due to the fact that no flame is in direct contact with the asphalt material 100 being under the heating and the drying process. The blue gases may be emitted when heating the recycled crushed asphalt including some amount of binding material. Another particularly advantage of the apparatus and method according to the embodiments is that the costs of the apparatus is only a fraction of the costs of the apparatuses in which the conventional methods of generating hot asphalts are applied. In the apparatus according to the embodiment, there is no need for filters, for example. One of the advantages of the embodiments is the possibility to dry the asphalt material. This is enabled by introducing additional air to the heated gas mixture. Another advantage is to allow the manufacture of asphalt materials for the hot asphalts, i.e., having a temperature of at least 100 degrees celsius.

Thus, according to an embodiment, the apparatus for performing the tasks of Figures 1 and 2 comprises supply means for providing heated gas, supply means for providing water or water vapor to the heated gas. The apparatus may further comprise supply means for providing air to the heated gas so as to control the temperature and moisture content of a heated gas mixture, wherein the heated gas mixture comprises the heated gas, the water vapor and the air. The apparatus may further comprise transport means for leading the heated gas mixture to a container containing the asphalt material so that the asphalt material is dried and heated by the heated gas mixture.

The method for heating and drying an asphalt material comprising mineral aggregate and/or recycled crushed asphalt is presented in Figure 2. The method begins in step 200. In step 202 heated gas is provided. In step 204, water or water vapor is provided to the heated gas. In step 206, air is provided to the heated gas so as to control the temperature and the moisture content of a heated gas mixture, wherein the heated gas mixture comprises the heated gas, the water vapor and the air. The method ends in step 208.

Embodiments of the invention may be implemented as computer programs in the controller 144 of Figure 1. The computer programs comprise instructions for executing a computer process for controlling the amount of air and water vapor (or water) being provided. The computer program implemented in the controller 144 may carry out, but is not limited to, the tasks related to Figures 1 and 2.

The computer program may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

Even though the invention has been described above with reference to an example according to the accompanying drawings, it is clear that the invention is not restricted thereto but can be modified in several ways within the scope of the appended claims. Further, it is clear to a person skilled in the art that the described embodiments may, but are not required to, be combined with other embodiments in various ways.

## Claims

1. A method for generating a heated gas mixture (114) for heating and drying asphalt material (100) comprising mineral aggregate and/or recycled crushed asphalt, the method comprising:
providing heated gas (104);
providing water vapor to the heated gas (104),
**characterized by** the method further comprising:
providing air (112) to the heated gas (104) so as to control the temperature and the moisture content of a heated gas mixture (114), wherein the heated gas mixture comprises the heated gas (104), the water vapor and the air (112).

2. The method claim 1, leading the heated gas mixture (114) to a container (118) containing the asphalt material (100) so that the asphalt material (100) is dried and heated by the heated gas mixture (114).

3. The method of claim 2, wherein the temperature of the asphalt material (100) is at least 100 degrees celsius after the heated gas mixture (114) has affected the asphalt material (100).

4. The method of any of the preceding claims, further comprising:
controlling the amount of the provided air (112) and the amount of the provided water vapor so as to control the temperature and the moisture content of the heated gas mixture (114).

5. The method of claim 4, wherein the ratio between the mass of the provided air (112) and the mass of the provided water vapor is between 2 and 9.

6. The method of any of the preceding claims, further comprising:
guiding the generated heated gas mixture (114) to be in contact with an outer surface of a combustion chamber (102), wherein the heated gas (104) is generated in the combustion chamber (102).

7. An asphalt material processing apparatus for generating a heated gas mixture (114) for heating and drying asphalt material (100) comprising mineral aggregate and/or recycled crushed asphalt, the apparatus comprising:
a gas supply (102) configured to provide heated gas (104) to at least one transport channel;
a water supply (106) configured to provide water vapor to the heated gas (104),
**characterized in that** the apparatus further comprises:
an air supply (110) configured to provide air (112) to the heated gas (104) so as to control the temperature and the moisture content of a heated gas mixture (114), wherein the heated gas mixture comprises the heated gas (104), the water vapor and the air (112).

8. The apparatus claim 7, wherein the apparatus further comprises:
the at least one transport channel (116) configured to transport the heated gas mixture (114) to a container (118) containing the asphalt material (100) so that the asphalt material (100) is dried and heated by the heated gas mixture (114).

9. The apparatus of claim 8, wherein the temperature of the asphalt material (100) is at least 100 degrees celsius after the heated gas mixture (114) has affected the asphalt material (100).

10. The apparatus of any of the preceding claims 8 to 9, wherein the apparatus further comprises:
the container (118) configured to receive the asphalt material (100) to be dried and heated, wherein the container (118) comprises:
an input (146) configured to receive the heated gas mixture (114) via the transport channel (116), wherein the input (146) is located at the lower half of the container (118) so that the heated gas mixture (114) dries and heats the asphalt material (100) from below upwards as the heated gas mixture (114) rises upwards;
an output (148) configured to allow the asphalt material (100) to exit the container (118), wherein the output (148) is located substantially at the bottom portion of the container (118).

11. The apparatus of any of the preceding claims 7 to 10, wherein the apparatus further comprises:
a controller (144) configure to control the amount of the provided air (112) and the amount of the provided water vapor so as to control the temperature and the moisture content of the heated gas mixture (114).

12. The apparatus of claim 11, wherein the ratio between the mass of the provided air (112) and the mass of the provided water vapor is between 2 and 9.

13. The apparatus of any of the preceding claims 7 to 12, wherein at least one transport channel (116) is in contact with an outer surface of a combustion chamber acting as the gas supply (102) so that the generated heated gas mixture (114) is in contact with the outer surface of the combustion chamber.

14. Use of a heated gas mixture (114) comprising heated gas (104), water vapor and added air (112) for heating and drying asphalt material (100) comprising mineral aggregate and/or recycled crushed asphalt.

15. The use of claim 14, wherein the asphalt material (100) is heated to at least 100 degrees celsius.
